# DEMANDE DE BREVET EUROPEEN

(11) **EP 1 840 860 A1**
(43) Date de publication de la demande: **03.10.2007**
(21) Numéro de dépôt: 07300897.1
(22) Date de dépôt: 23.03.2007
(51) Int. Cl.: G08G 1/16, G08G 1/0962

(54) **Procédé et système de détection de la circulation d'un véhicule à contresens au moyen d'un détecteur à formation d'images**

(30) Priorité: 31.03.2006 FR 0651154
(71) Demandeur: Peugeot Citroën Automobiles Société Anonyme, 78140 Velizy Villacoublay (FR)
(72) Inventeur: Charton, Stéphane, 75014 Paris (FR)
(74) Mandataire: Vigand, Régis Louis Michel

(57) **Abrégé**

- Le procédé de l'invention s'applique aux routes à deux sens de circulation, chaque sens de circulation ayant au moins une voie de circulation, ladite route ayant une ligne axiale continue (S) qui délimite les deux sens de circulation. Selon ce procédé, on détecte les bandes continues ou discontinues qui délimitent les voies de circulation, et en cas de détection d'une bande continue à droite du véhicule, on alerte le conducteur pour l'informer qu'il roule à contresens.
- Véhicules automobiles. Procédés et systèmes d'assistance à la conduite automobile.

## Description

La présente invention concerne un procédé de détection de la circulation d'un véhicule à contresens au moyen d'un détecteur à formation d'images, qui peut consister en une ou plusieurs caméras. La présente invention concerne également un système pour la mise en oeuvre d'un tel procédé.

Devant le nombre et la gravité des accidents de la route dus à une circulation à contresens, en particulier sur des autoroutes et des voies rapides, on cherche à perfectionner constamment les moyens propres à augmenter la sécurité des automobilistes.

Des solutions techniques ont déjà été conçues pour fournir une assistance aux conducteurs d'un véhicule automobile qui circulent sur le réseau routier.

Selon une demande de brevet français n° 2 213 549, on connaît un système passif de signalisation routière qui comporte des bandes de même largeur et d'espacement prédéterminés, disposées transversalement sur la chaussée, capables de réfléchir des radiations électromagnétiques et formant des combinaisons de codes à « n » bits d'information du type « 1 » et « 0 ». La combinaison de code est précédée ou suivie d'une information supplémentaire matérialisée par une bande réfléchissante d'une largeur différente de celle des autres bandes de la combinaison.

On connaît également, selon la demande de brevet français n° 2 580 097, un système d'assistance pour faciliter la circulation routière qui peut se résumer comme suit : un tronçon de chaussée est équipé d'un marquage codé magnétique sous forme de barres transversales dont l'épaisseur et l'écartement sont définis en fonction du code choisi. Le véhicule en circulation est équipé d'une boucle de détection et d'un dispositif détecteur destiné à détecter et interpréter ce marquage. Les informations recueillies sont transmises au conducteur par des signaux lumineux ou sonores ou par un affichage alphanumérique.

Ces systèmes de l'art antérieur ne visent pas particulièrement la question de la circulation à contresens. Les moyens qu'ils divulguent pourraient mutatis mutandis s'y appliquer, mais ces systèmes présentent l'inconvénient de nécessiter d'équiper la route, d'un collage ou d'un marquage.

On connaît également, selon le brevet des Etats-Unis d'Amérique US 3 729 179, un dispositif qui s'applique à la détection de la circulation à contresens d'un véhicule et à l'information du conducteur dans un tel cas. Ce dispositif est basé sur un ensemble de type émetteur récepteur de lumière.

L'inconvénient déjà mentionné de l'art antérieur est également présent sous une forme légèrement différente : en effet, selon l'objet de ce brevet, l'infrastructure doit être équipée de réflecteurs susceptibles de renvoyer la lumière de l'émetteur aux fins d'analyse par le système récepteur du véhicule.

On connaît aussi, selon le brevet des Etats-Unis d'Amérique US 5 982 278, un dispositif pour améliorer la sécurité de conduite d'un véhicule automobile qui fonctionne de la manière suivante : un jeu de capteurs de type émetteur récepteur permet notamment la lecture continue de marquages routiers existants, à savoir les bandes blanches de séparation des voies, les accotements de toutes sortes, ou bien encore de détecter les autres véhicules ou divers éléments d'infrastructure.

Mais pour détecter une circulation à contresens, il faut là aussi équiper la route de codes qui sont lus par le jeu de capteurs émetteurs récepteurs.

On a vu également que tous les dispositifs de l'art antérieur font communiquer l'infrastructure avec le véhicule pour transmettre des informations relatives à la circulation (limitations de vitesse, virages dangereux, sens de la circulation, etc.). Bien que l'éventail des informations transmises soit illimité, tous ces dispositifs en fait requièrent à la fois l'équipement du véhicule (récepteurs) et de l'infrastructure (émetteurs). Si l'équipement des véhicules semble envisageable parce qu'il peut s'agir d'un équipement (récepteur) unique embarqué, il en est autrement pour l'infrastructure pour laquelle l'équipement représente une infinité d'équipements (émetteurs), par conséquent un coût d'acquisition, de montage et d'entretien considérable.

Le but de la présente invention est, par conséquent, de concevoir un système de détection de la circulation à contresens d'un véhicule qui ne nécessite pas d'équipement particulier de l'infrastructure.

En d'autres termes, c'est un but de la présente invention de concevoir un système de détection de la circulation à contresens d'un véhicule qui ne nécessite d'équipements que ceux qui sont embarqués sur le véhicule, de tels équipements étant eux-mêmes capables d'acquérir des informations sur l'infrastructure par leurs propres moyens.

C'est également un but de la présente invention de concevoir un système de détection de la circulation à contresens d'un véhicule qui soit basé sur l'utilisation de caméras, c'est-à-dire d'éléments « passifs », contrairement aux éléments « actifs » constitués par les émetteurs récepteurs de certains systèmes de l'art antérieur.

C'est encore un but de la présente invention de concevoir un système de détection de la circulation à contresens d'un véhicule, qui soit basé sur un moyen technique de détection robuste, fiable et de meilleur coût possible.

Pour atteindre ces buts, la présente invention réalise un nouveau procédé de détection de la circulation d'un véhicule à contresens sur une route à deux sens de circulation, chaque sens de circulation ayant au moins une voie de circulation, et ladite route ayant une ligne axiale continue qui délimite les deux sens de circulation. Ce nouveau procédé comporte les étapes suivantes :
- on détecte les bandes continues ou discontinues qui délimitent les voies de circulation, et
- en cas de détection d'une bande continue à droite du véhicule, on alerte le conducteur pour l'informer qu'il roule à contresens.

On détecte lesdites bandes continues ou discontinues qui délimitent les voies de circulation au moyen d'un détecteur à formation d'images placé sur ledit véhicule.

Selon un mode préféré de réalisation de l'invention, on détecte lesdites bandes continues ou discontinues qui délimitent les voies de circulation en appliquant un procédé de « seuillage » aux images des marquages obtenues par ledit détecteur à formation d'images et ensuite une détection de contour desdits marquages.

Par procédé de « seuillage », on entend un procédé qui consiste à mettre en avant tous les points dont une caractéristique (par exemple, la couleur dans le procédé de l'invention) est « supérieure » à une valeur seuil donnée.

De préférence, le détecteur à formation d'images est constitué par au moins une caméra placée vers l'avant dudit véhicule.

En variante, le détecteur à formation d'images est constitué par au moins une caméra placée vers l'arrière dudit véhicule.

On alerte le conducteur du véhicule pour l'informer au moyen d'un message sonore, ou au moyen d'un message vibratoire, ou au moyen d'un message visuel, ou encore d'un message lumineux, ou de plusieurs desdits messages.

De préférence, s'il s'agit d'un message sonore, il est transmis par les haut-parleurs du véhicule et ce message est un son, ou bien c'est un message vocal.

S'il s'agit d'un message vibratoire, cela peut être un message vibratoire émis par le siège du conducteur du véhicule.

S'il s'agit d'un message visuel, cela peut être message émis par l'écran télématique du véhicule.

De plus, on peut également alerter le conducteur du véhicule au moyen d'un message lumineux sous la forme de voyants lumineux placés sur le tableau de bord.

On peut également alerter les autres usagers de la route du danger de circulation à contresens, au moyen d'un allumage des feux de détresse, ou encore au moyen d'un appel de phares, ou encore au moyen d'un signal d'avertisseur sonore.

La présente invention réalise aussi un nouveau système de détection pour la mise en oeuvre du procédé selon l'invention ci-dessus décrit de manière très générale.

De préférence, ce système comprend un détecteur à formation d'images pour observer les marquages au sol, monté sur le véhicule, et un module de traitement des images formées pour distinguer le caractère continu ou discontinu desdits marquages obtenues par ledit détecteur à formation d'images.

De manière préférentielle, le module de traitement des images fonctionne avec un algorithme de traitement qui applique un procédé de « seuillage » aux images des marquages formées par ledit détecteur à formation d'images, et détecte ensuite le contour desdits marquages.

Selon un mode préféré de réalisation de l'invention, le détecteur à formation d'images est constitué par au moins une caméra montée à l'avant du véhicule.

En variante ou en plus, le détecteur à formation d'images est constitué par au moins une caméra montée à l'arrière du véhicule.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est un schéma du marquage au sol qui équipe en France une route à 4 voies,
- la figure 2 est un schéma du marquage au sol qui équipe en France une route à 2x2 voies,
- la figure 3 est un schéma du marquage au sol qui équipe en France une autoroute, et
- la figure 4 illustre le principe schématisé d'un système de détection de la circulation d'un véhicule à contresens au moyen de caméras, selon la présente invention.

Comme déjà mentionné précédemment, l'objet de la présente invention est de détecter les cas de circulation à contresens sur les routes à chaussées séparées, à savoir les différentes routes pour automobiles et les autoroutes, en utilisant les marquages au sol existants, c'est-à-dire les lignes continues et discontinues existantes, les bandes de rives existantes.

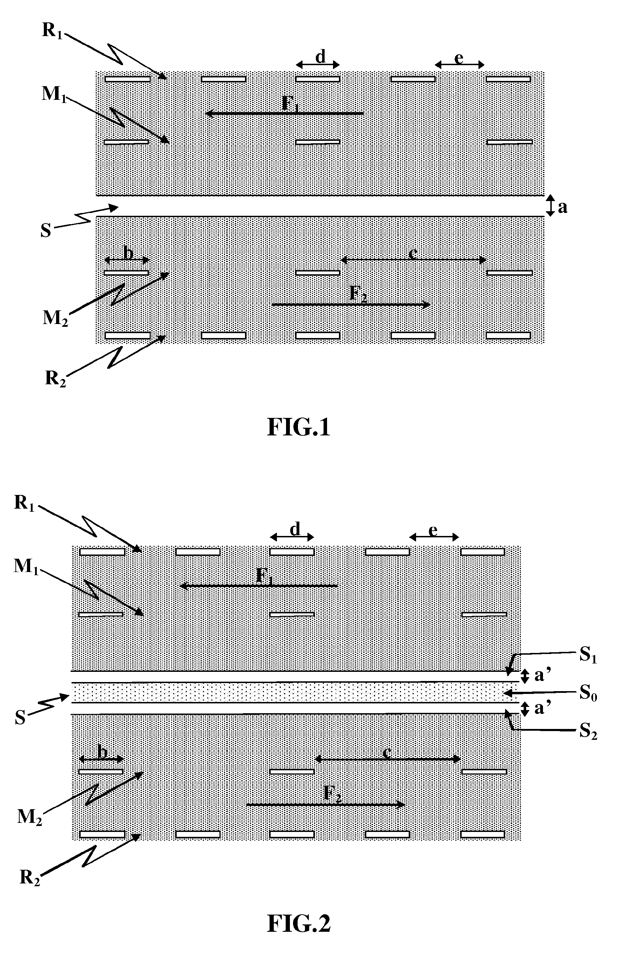

En France, les routes à 4 voies, les routes à 2x2 voies (avec distance entre les deux lignes de rives supérieures à 13,5 mètres) et les autoroutes sont équipées de marquages horizontaux spécifiques. Ces marquages horizontaux spécifiques partagent le point commun de comporter une ligne blanche continue de séparation des sens de circulation. On peut donc rencontrer les trois situations représentées sur les figures 1 à 3, respectivement.

Le schéma de la figure 1 représente le marquage au sol en France équipant une route à 4 voies. F₁ et F₂ représentent les deux sens de circulation. La séparation S entre les deux sens de circulation est une ligne continue de largeur a, avec a = 37,5 cm. Les rives supérieures R₁ et R₂ sont des lignes discontinues régulières formées de segments de longueur d et espacés d'une distance e, avec d = 3 mètres et e = 3,5 mètres. Les lignes séparant deux voies d'un même sens de circulation, c'est-à-dire les lignes M1 et M2, sont également des lignes régulières à traits interrompus, formées de segments de longueur b espacés d'une distance c, avec b = 3 mètres et c = 10 mètres.

Le schéma de la figure 2 représente le marquage au sol en France équipant une route à 2x2 voies, c'est-à-dire une route dans laquelle la distance entre les deux rives supérieures R₁ et R₂ est supérieure à 13,5 mètres. F₁ et F₂ représentent les deux sens de circulation. La séparation S entre les deux sens de circulation comporte deux lignes continues S₁ et S₂ de séparation de largeur a', avec a' = 22,5 cm, les deux lignes étant elles-mêmes séparées par un espace central S₀. Les rives supérieures R₁ et R₂ sont des lignes régulières à traits interrompus formées de segments de longueur d et espacés d'une distance e, avec d = 3 mètres et e = 3,5 mètres. Les lignes séparant deux voies d'un même sens de circulation, c'est-à-dire les lignes M1 et M2, sont également des lignes à traits interrompus régulières, formées de segments de longueur b espacés d'une distance c, avec b = 3 mètres et c = 10 mètres.

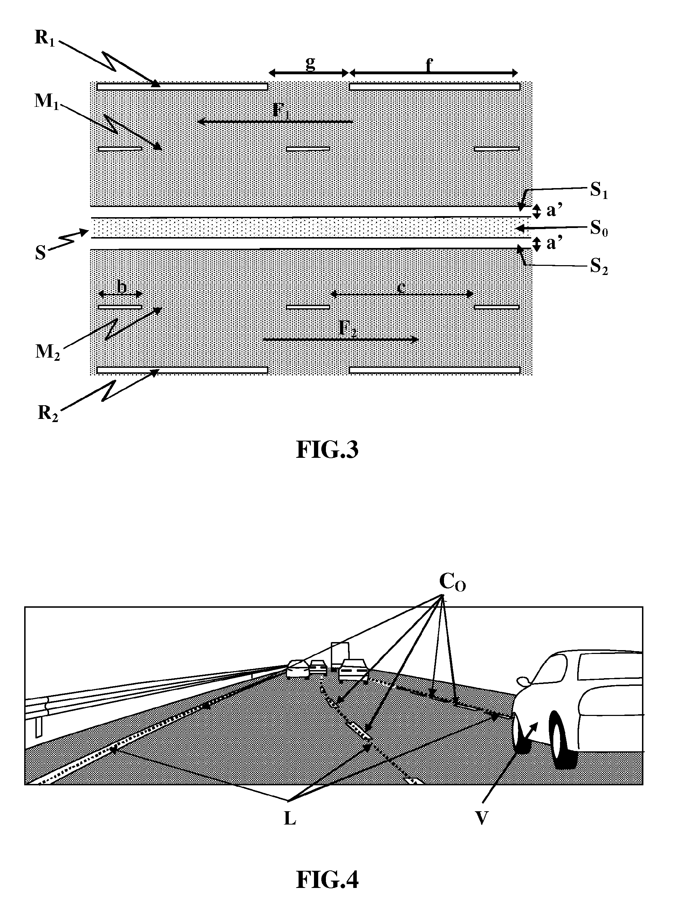

Le schéma de la figure 3 représente le marquage au sol en France équipant une autoroute. F₁ et F₂ représentent, comme précédemment, les deux sens de circulation. La séparation S entre les deux sens de circulation est identique à celle de la figure 2 avec deux lignes continues S₁ et S₂ de séparation de largeur a', avec a' = 22,5 cm, les deux lignes étant elles-mêmes séparées par un espace central S₀. Les rives supérieures R₁ et R₂ sont des lignes en traits interrompus régulières formées de segments de longueur f et espacés d'une distance g, avec f = 10 mètres et g = 6 mètres. Les lignes séparant deux voies d'un même sens de circulation, c'est-à-dire les lignes M1 et M2, sont également des lignes à traits interrompus régulières, formées de segments de longueur b espacés d'une distance c, avec b = 3 mètres et c = 10 mètres, comme dans le cas de la route à 2x2 voies de la figure 2.

La ligne axiale continue S qui délimite les deux sens de circulation, se trouve dans tous les cas des figures 1 à 3 toujours à la gauche du véhicule en situation de circulation normale.

Ainsi, en embarquant à bord du véhicule, si ce dernier est équipé d'un moyen d'observation de la route capable de détecter les bandes continues et discontinues qui délimitent les différentes voies de circulation, il est possible de déterminer le type de route sur lequel roule le véhicule : à savoir route à 4 voies, à 2x2 voies, ou autoroute. Le procédé de la présente invention se présente alors avec les étapes suivantes :
- on détecte les bandes continues ou discontinues qui délimitent les voies de circulation, et
- en cas de détection d'une bande continue à droite du véhicule, on alerte le conducteur pour l'informer qu'il roule à contresens.

La présente invention concerne également les moyens ou solutions techniques de mise en oeuvre du procédé ainsi décrit dans sa généralité.

Parmi les systèmes d'assistance à la conduite qui équipent aujourd'hui certains véhicules automobiles, il en existe qui utilisent une caméra dirigée vers l'avant ou vers l'arrière du véhicule pour observer les marquages au sol. Ces systèmes ont été développés pour assurer une fonction désignée « LDW » (Lane Departure Warning) qui lit les marquages de voie sur la route et avertit les occupants si une déviation de la voie est détectée.

Selon le principe de la présente invention, on réalise un nouveau procédé de détection de la circulation d'un véhicule à contresens en partant de systèmes, de type connu en soi « LDW », qui sont transformés pour distinguer les lignes continues des lignes discontinues et dont les algorithmes de traitement d'images sont également transformés de façon à détecter le type de marquage au sol.

Les systèmes connus « LDW » ne renvoient qu'une information sur la position relative du véhicule par rapport aux voies de circulation. Selon le système de l'invention, l'information retournée concerne le caractère continu ou discontinu de la ligne de marquage observée.

Ainsi, pour chaque marquage au sol de délimitation de voie détecté, représenté par une ligne en traits pointillés épais L sur le dessin de la figure 4, il suffit de parcourir le marquage blanc sous-jacent dans l'image et de vérifier s'il présente ou non des discontinuités.

Cette opération de vérification de discontinuités peut faire appel à des procédés classiques de traitement d'images, connus en soi, parmi lesquels le procédé suivant en deux étapes :
- une première étape dite de « seuillage ». Cette étape consiste à mettre en avant tous les points dont la couleur est supérieure à une valeur de seuil donnée. Si, par exemple, l'image est en niveaux de gris et codée sur 8 bits, la couleur noire prend la valeur 0, la couleur blanche 255, c'est-à-dire une valeur égale à 2⁸ - 1, et les nuances de gris se répartissent entre ces deux extrêmes, et
- une seconde étape par laquelle est opérée une détection de contour des marquages représentés en traits pleins fins désignés par Co sur le dessin de la figure 4.

De cette façon, si une bande de délimitation des voies (ligne en traits pointillés épais L) se trouve décrite par plusieurs contours, elle correspond à une ligne continue, donc à une ligne de séparation de deux sens de circulation.

Une telle solution technique permet donc de bien extraire le caractère continu ou discontinu des marquages horizontaux au sol délimitant les voies de circulation.

Le conducteur est alerté d'une circulation à contresens dès qu'une bande blanche continue est détectée sur la droite de son véhicule V.

Le message d'alerte peut être un ou plusieurs des messages suivants :
- un message sonore, qui peut être un message son ou un message vocal dans les haut-parleurs du véhicule,
- un message sous la forme d'une vibration, par exemple une vibration du siège du conducteur,
- un message lumineux sous la forme de voyants lumineux placés sur le tableau de bord,
- un message visuel sous la forme d'un message qui apparaît dans l'écran télématique du véhicule.

Il est également possible d'informer les autres usagers de la route du danger qui survient par la circulation à contresens en provoquant l'allumage des feux de détresse, ou un appel de phares, ou un signal d'avertisseur sonore ou d'autres signaux d'alerte.

## Revendications

1. Procédé de détection de la circulation d'un véhicule à contresens sur une route à deux sens de circulation, chaque sens de circulation ayant au moins une voie de circulation, et ladite route ayant une ligne axiale (S) continue qui délimite les deux sens de circulation (Fi, F₂), **caractérisé en ce qu'**on détecte les bandes continues ou discontinues qui délimitent les voies de circulation (R₁, M₁, S, M₂, R₂), et en cas de détection d'une bande continue à droite du véhicule, on alerte le conducteur pour l'informer qu'il roule à contresens.

2. Procédé de détection de la circulation d'un véhicule à contresens selon la revendication 1, **caractérisé en ce qu'**on détecte lesdites bandes (R₁, M₁, S, M₂, R₂) continues ou discontinues qui délimitent les voies de circulation au moyen d'un détecteur à formation d'images placé sur ledit véhicule.

3. Procédé de détection de la circulation d'un véhicule à contresens selon la revendication 2, **caractérisé en ce qu'**on détecte lesdites bandes (R₁, M₁, S, M₂, R₂) continues ou discontinues qui délimitent les voies de circulation en appliquant un procédé de « seuillage » aux images des marquages obtenues par ledit détecteur à formation d'images et une détection de contour desdits marquages.

4. Procédé de détection de la circulation d'un véhicule à contresens selon l'une quelconque des revendications 1 à 3, **caractérisé en ce que** ledit détecteur à formation d'images est constitué par au moins une caméra placée vers l'avant dudit véhicule.

5. Procédé de détection de la circulation d'un véhicule à contresens selon l'une quelconque des revendications 1 à 3, **caractérisé en ce que** ledit détecteur à formation d'images est constitué par au moins une caméra placée vers l'arrière dudit véhicule.

6. Procédé de détection de la circulation d'un véhicule à contresens selon l'une quelconque des revendications 1 à 5, **caractérisé en ce qu'**on alerte le conducteur du véhicule pour l'informer au moyen d'au moins un message sonore transmis par les haut-parleurs du véhicule et choisi parmi les messages suivants : un son, un message vocal.

7. Procédé de détection de la circulation d'un véhicule à contresens selon l'une quelconque des revendications 1 à 5, **caractérisé en ce qu'**on alerte le conducteur du véhicule pour l'informer au moyen d'un message vibratoire émis par le siège de conducteur du véhicule.

8. Procédé de détection de la circulation d'un véhicule à contresens selon l'une quelconque des revendications 1 à 5, **caractérisé en ce qu'**on alerte le conducteur du véhicule pour l'informer au moyen d'un message visuel émis par l'écran télématique du véhicule.

9. Procédé de détection de la circulation d'un véhicule à contresens selon l'une quelconque des revendications 1 à 5, **caractérisé en ce qu'**on alerte le conducteur du véhicule pour l'informer au moyen d'un message lumineux sous la forme de voyants lumineux placés sur le tableau de bord.

10. Procédé de détection de la circulation d'un véhicule à contresens selon l'une quelconque des revendications 1 à 9, **caractérisé en ce qu'**on alerte également les autres usagers de la route du danger de circulation à contresens au moyen d'un ou plusieurs signaux choisis parmi les signaux suivants : allumage des feux de détresse, appel de phares, signal d'avertisseur sonore.

11. Système de détection de la circulation d'un véhicule à contresens sur une route à deux sens de circulation, pour la mise en oeuvre du procédé selon l'une quelconque des revendications 1 à 10, **caractérisé en ce qu'**il comprend un détecteur à formation d'images pour observer les marquages au sol (R₁, M₁, S, M₂, R₂), monté sur le véhicule, et un module de traitement des images ainsi formées pour distinguer le caractère continu ou discontinu des marquages dont les images sont formées par ledit détecteur à formation d'images.

12. Système de détection de la circulation d'un véhicule à contresens selon la revendication 11, **caractérisé en ce que** ledit module de traitement des images fonctionne avec un algorithme de traitement qui applique un procédé de « seuillage » aux images des marquages (R₁, M₁, S, M₂, R₂) formées par ledit détecteur à formation d'images, et détecte ensuite le contour desdits marquages (R₁, M₁, S, M₂, R₂).

13. Système de détection de la circulation d'un véhicule à contresens selon l'une quelconque des revendications 11 et 12, **caractérisé en ce que** ledit détecteur à formation d'images est constitué par au moins une caméra montée à l'avant ou à l'arrière du véhicule.
